(19) Europäisches Patentamt
European Patent Office
Office européen des brevets

(11) Publication number: **0 095 855**
**B1**

(12) # EUROPEAN PATENT SPECIFICATION

(45) Date of publication of patent specification: **08.04.87**

(51) Int. Cl.⁴: **C 08 F 10/00,** C 08 F 4/64

(21) Application number: **83302809.5**

(22) Date of filing: **17.05.83**

(54) **Process for polymerizing ethylene.**

(30) Priority: **28.05.82 JP 89984/82**
**15.11.82 JP 198892/82**

(43) Date of publication of application:
**07.12.83 Bulletin 83/49**

(45) Publication of the grant of the patent:
**08.04.87 Bulletin 87/15**

(84) Designated Contracting States:
**DE FR GB IT NL**

(56) References cited:
**EP-A-0 027 366**
**GB-A- 828 828**
**GB-A- 932 231**
**GB-A-2 078 234**

(73) Proprietor: **Ube Industries, Ltd.**
**12-32, Nishihonmachi 1-chome**
**Ube-shi, Yamaguchi-ken (JP)**

(72) Inventor: **Yamada, Hirotaka**
**1-203, UBE-shataku 44-3, Yamaki**
**Ichihara-shi Chiba-ken (JP)**

(74) Representative: **Fisher, Bernard et al**
**Raworth, Moss & Cook 36 Sydenham Road**
**Croydon Surrey CR0 2EF (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 095 855 B1

**Description**

Background of the invention

(1) Field of the invention

This invention relates to a process for the polymerization of ethylene. More particularly, it relates to a process for the high pressure polymerization of ethylene or a mixture of ethylene with an α-olefin having at least three carbon atoms using a Ziegler type catalyst having an enhanced activity.

(2) Description of the prior art

Several proposals have been made on the high-pressure polymerization of ethylene using a Ziegler type catalyst. For example, Japanese Examined Patent Publication No. 48-6183 discloses a process in which a catalyst obtained from a trivalent titanium compound and an organic aluminum compound is preliminarily treated by contacting the catalyst with an α-olefin and ethylene is polymerized under a high pressure in the presence of the preliminarily treated catalyst. According to this process, the amount of polyethylene formed per unit amount of the trivalent titanium compound used is small. For example, in Example 1 of this patent publication, the amount of polyethylene formed per gram of titanium trichloride is as small as about 8,600 g, and therefore, the operation of removing the catalyst residue from the formed polyethylene is indispensable. As means for increasing the yield of polyethylene based on the catalyst used, there is known a process in which ethylene is polymerized under a high pressure in the presence of a catalyst obtained from a solid catalyst component comprising a titanium compound supported on a magnesium compound and an organic aluminum compound (see Japanese Unexamined Patent Publication No. 56-99209 and No. 56-161406). The amount of polyethylene formed per unit amount of the solid catalyst component according to this process is much larger than in the above-mentioned process. However, in order to omit the operation of removing the catalyst residue from the formed polyethylene, it is necessary to further increase the yield of polyethylene based on the solid catalyst component.

Summary of the invention

It is a primary object of the present invention to provide a process for the high-pressure polymerization of ethylene in which the amount of polyethylene formed per unit amount of the solid catalyst component is very large.

In accordance with the present invention, there is provided a process for the polymerization of ethylene, which comprises polymerizing ethylene or a mixture of ethylene with an α-olefin having at least 3 carbon atoms under a pressure of at least 200 kg/cm$^2$ at a temperature not lower than 125°C in the presence of a catalyst obtained from (A) a solid catalyst component and (B) an organic aluminum compound represented by the following formula (I):

$$R^4_nAlX^2_{3-n} \quad (I)$$

wherein $R^4$ is an alkyl group having 1 to 6 carbon atoms, $X^2$ is a halogen atom, and n is a number of from 1.5 to 3,

said solid catalyst component being obtained by (1) reacting an aluminum halide with a silicon compound represented by the following formula (II):

$$R^1_mSi(OR^2)_{4-m} \quad (II)$$

wherein $R^1$ is an alkyl group having 1 to 8 carbon atoms or a phenyl group, $R^2$ is an alkyl group having 1 to 8 carbon atoms, and m is 1, 2 or 3.

(2) reacting the reaction produce with a Grignard compound represented by the following formula (III):

$$R^3MgX^1 \quad (III)$$

wherein $R^3$ is an alkyl group having 1 to 8 carbon atoms and $X^1$ is a halogen atom, to form a carrier, and then, (3) contacting the carrier with a titanium tetrahalide.

Description of the preferred embodiments

According to the present invention, polyethylene is obtained in an extremely high yield based on the solid catalyst component. Therefore, the operation of removing the catalyst residue from the polyethylene as formed can be omitted. Furthermore, not only a high-density ethylene homopolymer, but also a linear low-density ethylene copolymer can be obtained by copolymerizing ethylene with an α-olefin having at least 3 carbon atoms.

In the present invention, the preparation of the solid catalyst component (A) is carried out in an atmosphere of an inert gas such as nitrogen or argon. It is preferable that the starting materials used for the preparation of the solid catalyst component be substantially anhydrous.

As examples of the aluminum halide used in the present invention, aluminum chloride, aluminum bromide and aluminum iodide can be mentioned. Of these, aluminum chloride is preferable.

As examples of the silicon compound represented by the formula (II), there can be mentioned methyltrimethoxysilane, methyltriethoxysilane, methyltri-n-butoxysilane, methyltriisopentoxysilane, methyltri-n-hexoxysilane, methyltriisooctoxysilane, ethyltriethoxysilane, ethyltriisopropoxysilane, ethyltriisopentoxysilane, n-butyltriethoxysilane, isobutyltriethoxysilane, isopentyltriethoxysilane, isopentyltri-n-butoxysilane, dimethyldiethoxysilane, dimethyldi-n-butoxysilane, dimethyldiisopentoxysilane, diethyldiethoxysilane, diethyldiisopentoxysilane, di-n-butyldiethoxysilane, diisobutyldiisopentoxysilane, trimethylmethoxysilane, trimethylethoxysilane, trimethylisobutoxysilane, triethylisopropoxysilane, tri-n-propylethoxysilane, tri-n-butylethoxysilane, triisopentylethoxysilane, phenyltriethoxysilane, phenyltriisobutoxysilane, phenyltriisopentoxysilane, diphenyldiethoxysilane, diphenyldiisopentoxysilane, diphenyldioctoxysilane, triphenylmethoxysilane, triphenylethoxysilane and triphenylisopentoxysilane.

It is preferable that the aluminum halide be used for the reaction in an amount of from 0.1 to 10 moles, more preferably from 0.3 to 2 moles, per mole of the silicon compound.

The reaction of the aluminum halide with the silicon compound is ordinarily carried out by stirring both the compounds in an inert organic solvent at a temperature of from −50°C to 100°C for from 0.1 to 2 hours. The reaction proceeds with generation of heat, and the reaction product is obtained in the form of a solution in the inert organic solvent. The reaction product is used in the form of the solution in the inert organic solvent for the reaction with a Grigard compound.

As the Grignard compound represented by the formula (III), an alkyl magnesium chloride, i.e., the compound of the formula (III) in which $X^1$ is a chlorine atom, is preferably used. As specific examples, methyl magnesium chloride, ethyl magnesium chloride, n-butyl magnesium chloride and n-hexyl magnesium chloride can be mentioned.

It is preferable that the Grignard compound be used in an amount of from 0.05 to 4 moles, more preferably from 1 to 3 moles, per mole of the aluminum halide used for the preparation of the above-mentioned reaction product.

The method in which the reaction product of the aluminum halide with the organic silicon compound is reacted with the Grignard compound is not particularly critical, but it is preferable that the reaction be effected by gradually adding a solution of the Grignard compound in an ether or an ether/aromatic hydrocarbon mixed solvent to a solution of the above-mentioned reaction product in an inert organic solvent or by adding the solution of the above-mentioned reaction product to the solution of the Grignard compound. A compound represented by the following formula:

$$R^5—O—R^6$$

wherein $R^5$ and $R^6$ are an alkyl group having 2 to 8 carbon atoms, is preferably used as the ether in which the Grignard compound is dissolved. As example of the ether, diethyl ether, diisopropyl ether, di-n-butyl ether and diisoamyl ether can be mentioned.

The reaction is carried out ordinarily at a temperature of from −50 to 100°C and preferably at a temperature of from −20 to 25°C. The reaction time is not particularly critical, but ordinarily, the reaction is conducted for not less than 5 minutes. As the reaction proceeds, the formed white carrier is precipitated. The so obtained carrier may be contacted in the form of the as-obtained reaction mixture with a titanium tetrahlide. However, it is preferable that, before the contact treatment, the formed carrier be separated from the reaction mixture and then washed with an inert organic solvent.

As specific examples of the titanium tetrahalide, titanium tetrachloride, titanium tetrabromide and titanium tetraiodide can be mentioned. Of these, titanium tetrachloride is preferable. The titanium tetrahalide is ordinarily used in an amount of from 1 to 100 moles per mole of the Grignard compound used for the preparation of the carrier. The so-obtained solid catalyst component is separated from the reaction mixture by filtration and washed with an inert organic solvent. The titanium content in the solid catalyst component is 0.5 to 10% by weight.

As specific preferred examples of the organic aluminum compound represented by the formula (I), there can be mentioned those in which n is 3 (namely, which is represented by the formula $R^4_3Al$), such as triethyl aluminum, triisobutyl aluminum and tri-n-hexyl aluminum, and those in which n is less than 3 and $X^2$ is a chlorine atom, such as dimethyl aluminum chloride, diethyl aluminum chloride, dibutyl aluminum chloride, dihexyl aluminum chloride, methyl aluminum sesquichloride, ethyl aluminum sesquichloride, butyl aluminum sesquichloride and hexyl aluminum sesquichloride. Of these organic aluminum compounds, those which are represented by the formula $R^4_nAlX^2_{3-n}$ (n is at least 1.5 but less than 3) are more preferable than those which are represented by the formula $R^4_3Al$, because the former exhibit more enhanced catalytic activity. Diethyl aluminum chloride and dibutyl aluminum chloride are most preferable. The organic aluminum compound is ordinarily used in an amount of from 1 to 1000 moles per gram-atom of titanium in the solid catalyst component.

As specific examples of the inert organic solvent used in the respective stages in the preparation of the solid catalyst component, there can be mentioned aliphatic hydrocarbons such as n-hexane and n-heptane; aromatic hydrocarbons such as benzene, toluene and xylene; and halogenated products thereof.

In the present invention, ethylene or a mixture of ethylene with a α-olefin having at least 3 carbon atoms is polymerized in the presence of a catalyst obtained from the solid catalyst component (A) and the organic aluminum compound (B) to obtain an ethylene homopolymer or copolymer. Propylene, butene-1,

4-methylpentene-1 and octene-1 can be mentioned as specific examples of the α-olefin having at least 3 carbon atoms.

The polymerization pressure is at least 200 kg/cm$^2$, preferably from 500 to 3000 kg/cm$^2$. The polymerization temperature is not lower than 125°C, preferably in the range of from 150 to 350°C. The mean residence time of the monomer in the polymerization system is in the range of from 2 to 600 seconds, preferably from 10 to 150 seconds.

A tubular reactor or an autoclave reactor can be used as the polymerization apparatus.

The solid catalyst component (A) and the organic aluminum compound (B) may be supplied to the polymerization system separately or in the form of a mixture prepared in advance.

The molecular weight of polyethylene to be formed by the polymerization can easily be controlled by adding a molecular weight modifier, for example, hydrogen, to the polymerization system.

The present invention will now be described in detail with reference to the following examples. In the examples, the "polymerization activity" indicates the yield (g) of the polymer per gram of the solid catalyst component (A) used for the polymerization. "M.I." indicates the melt flow index of the polymer as measured at 190°C under a load of 2.16 kg according to ASTM D-1238.

Examples 1 through 5

(1) Preparation of Solid Catalyst Component (A)

To 1.00 kg of anhydrous aluminum chloride was added 15 l of toluene. 5 l of a solution of 1.32 kg of methyltriethoxysilane in toluene was dropped into the mixture with stirring at 25°C over a period of 30 minutes. The mixture was maintained at that temperature for 30 minutes to effect reaction.

The reaction mixture was cooled to −6°C. 10 l of a solution of 1.58 kg of n-butyl magnesium chloride in diisoamyl ether was dropped into the reaction mixture over a period of 30 minutes. Then, the reaction mixture was heated to 30°C over a period of 60 minutes, and maintained at this temperature for 60 minutes to effect reaction. The precipitated carrier was separated by filtration and washed with toluene.

The carrier was then suspended in 15 l of toluene. To the suspension, 8.25 l of titanium tetrachloride was added whereby the solid carrier was contacted with titanium tetrachloride with stirring at 90°C for 60 minutes. At the same temperature, the obtained solid catalyst component was recovered by filtration and washed with n-heptane. N-heptane was added to the solid catalyst component to form a slurry having a concentration of 147 mg/ml. The titanium content in the solid catalyst component was 5.4 % by weight.

(2) Polymerization

In a tubular reactor, a monomer composition shown in Table 1 was continuously polymerized at 250°C under a pressure of 1600 kg/cm$^2$. The solid catalyst component was continuously supplied at a rate shown in Table 1 to the reactor. Triethyl aluminum was continously supplied at a rate of 5 moles per gram-atom of titanium in the solid catalyst component to the reactor. The flow rate of the monomer in the reactor was 10 m/sec and the mean residence time was 40 seconds.

The results are shown in Table 1.

TABLE 1

| Example No. | Monomer composition (% by weight) | | Hydrogen content (mole %) | Solid catalyst component feed rate (g/hr) | Polymerization activity | Ethylene polymer | |
|---|---|---|---|---|---|---|---|
| | Ethylene | Butene-1 | | | | M.I. (g/10 min) | density (g/cm$^3$) |
| 1 | 100 | — | — | 62.4 | 20700 | 0.02 | 0.960 |
| 2 | 70 | 30 | — | 66.6 | 19800 | 0.30 | 0.930 |
| 3 | 70 | 30 | 0.2 | 66.6 | 19500 | 2.5 | 0.931 |
| 4 | 90 | 10 | 0.2 | 63.2 | 20500 | 1.2 | 0.942 |
| 5 | 50 | 50 | 0.2 | 69.1 | 18500 | 5.0 | 0.922 |

Comparative Examples 6 through 10

The procedures of Examples 1 through 5 were repeated in the same manner except that 1.56 kg of tetraethoxysilane was used instead of methyltriethoxysilane.

The results are shown in Table 2. Incidentally, the titanium content in the solid catalyst component was 4.8% by weight.

TABLE 2

| Example No. | Monomer composition (% by weight) | | Hydrogen content (mole %) | Solid catalyst component feed rate (g/hr) | Polymerization activity | Ethylene polymer | |
|---|---|---|---|---|---|---|---|
| | Ethylene | Butene-1 | | | | M.I. (g/10 min) | density (g/cm$^3$) |
| 6 | 100 | — | — | 87.7 | 14800 | 0.03 | 0.960 |
| 7 | 70 | 30 | — | 87.7 | 14600 | 0.23 | 0.933 |
| 8 | 70 | 30 | 0.2 | 86.8 | 14700 | 2.4 | 0.930 |
| 9 | 90 | 10 | 0.2 | 80.1 | 15900 | 1.3 | 0.941 |
| 10 | 50 | 50 | 0.2 | 94.4 | 13800 | 4.7 | 0.920 |

Example 11

The procedures of Example 3 were repeated in the same manner except that a solid catalyst component having a titanium content of 5.6% by weight was prepared by using 1.8 kg of phenyltriethoxysilane instead of methyltriethoxysilane.

The polymerization activity was 20400, M.I. of the formed ethylene polymer was 2.4 g/10 min, and the density was 0.926 g/cm$^3$.

Example 12

The procedures of Example 3 were repeated in the same manner except that an autoclave type continuous reactor provided with a stirrer was used instead of the tubular reactor and the feed rate of the solid catalyst component was changed to 0.51 g/hr.

The polymerization activity was 19300, M.I. of the formed ethylene polymer was 1.8 g/10 min, and the density was 0.930 g/cm$^3$.

Example 13

(1) Preparation of solid catalyst component

To 15 l of a slurry containing 1.0 kg of aluminum chloride in toluene was dropped 5 l of a solution of 1.3 kg of methyltriethoxysilane in toluene at about 20°C over a period of 50 minutes. The mixture was then heated to 30°C and maintained at this temperature for 2.5 hours.

The reaction mixture was cooled to −10°C, 10 l of a solution of 1.57 kg of n-butyl magnesium chloride in diisoamyl ether was dropped to the reaction mixture over a period of 1.7 hours. Then, the reaction mixture was heated to 25°C and maintained at this temperature for 1 hour. The precipitated carrier was recovered by filtration and washed with toluene.

To 15 l of a suspension of the carrier in toluene was added 8.3 l of titanium tetrachloride. The two compounds were contacted with each other at 90°C for 1 hour. The obtained solid catalyst component was recovered by filtration and washed with toluene. The titanium content in the solid catalyst component was 5.2% by weight.

(2) Polymerization

A monomer mixture comprising 60% by weight of ethylene and 40% by weight of 1-butene and hydrogen in an amount of 0.2% by mole, based on the monomer mixture, were continuously supplied to a tubular reactor having an entire length of about 400 m, where ethylene was copolymerized with 1-butene under a pressure of 2000 kg/cm$^2$.

The solid catalyst component and diethyl aluminum chloride were continuously fed into the reactor at rates of 56 g/hr and 38 g/hr, respectively, through an inlet of the reactor.

The temperature at the inlet of the reactor was 105°C and the highest temperature in the reactor was 200°C. The flow rate of the monomer mixture in the reactor was 10 m/sec, and the mean residence time was about 40 seconds.

The above polymerization was conducted continuously for 3 hours. An ethylene/1-butene copolymer having M.I. of 3.2 g/10 min and a density of 0.922 g/cm$^3$ was obtained at a polymerization activity of 2400.

Examples 14 and 15—Example 14 is comparative

The procedures of Example 13 were repeated in the same manner except that 1.52 kg of tetraethyoxysilane (Example 14) or 1.75 kg of phenyltriethoxysilane (Example 15) was used instead of methyltriethoxysilane. The results are shown in Table 3.

TABLE 3

| Example No. | M.I. (g/10 min) | Density (g/cm$^3$) | Polymerization activity |
|---|---|---|---|
| 14 | 3.0 | 0.922 | 16800 |
| 15 | 3.1 | 0.923 | 18500 |

**Claims**

1. A process for the polymerization of ethylene, which comprises polymerizing ethylene or a mixture of ethylene with an α-olefin having at least 3 carbon atoms under a pressure of at least 200 kg/cm$^2$ at a temperature not lower than 125°C in the presence of a catalyst obtained from (A) a solid catalyst component and (B) an organic aluminum compound represented by the following formula (I):

$$R^4_nAlX^2_{3-n} \quad (I)$$

wherein $R^4$ is an alkyl group having 1 to 6 carbon atoms, $X^2$ is a halogen atom, and n is a number of from 1.5 to 3,
said solid catalyst component being obtained by (1) reacting an aluminum halide with a silicon compound represented by the following formula (II):

$$R^1{}_mSi(OR^2)_{4-m} \qquad (II)$$

wherein $R^1$ is an alkyl group having 1 to 8 carbon atoms or a phenyl group, $R^2$ is an alkyl group having 1 to 8 carbon atoms, and m is 1, 2, or 3.
(2) reacting the reaction product with a Grignard compound represented by the following formula (III).

$$R^3MgX^1 \qquad (III)$$

wherein $R^3$ is an alkyl group having 1 to 8 carbon atoms and $X^1$ is a halogen atom, to form a carrier, and then, (3) contacting the carrier with a titanium tetrahalide.

2. A process according to claim 1, wherein said reaction product of an aluminum halide and the silicon compound of the formula (II) is prepared by reacting 0.1 to 10 moles, per mole of the silicon compound, of an aluminum halide in an inert organic solvent at a temperature of from −50 to 100°C from from 0.1 to 2 hours.

3. A process according to claim 1, wherein said aluminum halide is aluminum chloride.

4. A process according to claim 1, wherein said silicon compound of the formula (II) is methyltriethoxysilane or phenyltriethoxysilane.

5. A process according to claim 1, wherein the reaction product of an aluminum halide with the silicon compound of the formula (II) is reacted with 0.05 to 4 moles of the Grignard compound of the formula (III), per mole of the aluminum halide used for the preparation of said reaction product, in a manner such that a solution of said reaction product in an inert organic solvent and a solution of the Grignard compound in an ether or a mixed solvent of an ether and an aromatic organic solvent are gradually incorporated with each other, said ether being represented by the formula:

$$R^5—O—R^6$$

wherein $R^5$ and $R^6$ are an alkyl group having 2 to 8 carbon atoms.

6. A process according to claim 1, wherein said Grignard compound of the formula (III) is an alkyl magnesium chloride.

7. A process according to claim 1, wherein the carrier, prepared by the reaction of the reaction product of an aluminum halide and the silicon compound with the Grignard compound, is washed with an inert organic solvent prior to said contact treatment with the titanium tetrahalide.

8. A process according to claim 1, wherein said carrier is contacted with 1 to 100 moles of the titanium tetrahalide per mole of the Grignard compound used for the preparation of said carrier.

9. A process according to claim 1, wherein said titanium tetrahalide is titanium tetrachloride.

10. A process according to claim 1, wherein the amount of said organic aluminum compound (B) is in the range of from 1 to 1,000 moles per gram-atom of titanium contained in the solid catalyst component (A).

11. A process according to claim 1, wherein said organic aluminum compound (B) is triethyl aluminum, triisobutyl aluminum, diethyl aluminum chloride or dibutyl aluminum chloride.

12. A process according to claim 1, wherein ethylene or a mixture of ethylene with a mixture of ethylene with an α-olefin having at least 3 carbon atoms is polymerized under a pressure of from 500 to 3000 kg/cm² at a temperature of from 150 to 350°C while the solid catalyst component (A) and the organic aluminum compound (B) are fed to the polymerization system separately or as a mixture thereof.

**Patentansprüche**

1. Verfahren zur Polymerisation von Ethylen, bei dem man Ethylen oder eine Mischung von Ethylen und einem α-Olefin mit mindestens 3 Kohlenstoffatomen unter einem Druck von mindestens 200 kg/cm² bei einer Temperatur von nicht weniger als 125°C in Gegenwart eines Katalysators polymerisiert, der erhalten wird aus (A) einer festen Katalysatorkomponente und (B) einer organischen Aluminiumverbindung, die der folgenden Formel (I) entspricht:

$$R^4{}_3AlX^2{}_{3-n} \qquad (I)$$

in der bedeuten: $R^4$ eine Alkylgruppe mit 1 bis 6 Kohlenstoffatomen, $X^2$ ein Halogenatom und n eine Zahl von 1,5 bis 3,
wobei die feste Katalysatorkomponente erhalten wird durch (1) Umsetzen eines Aluminiumhalogenides mit einer Siliciumverbindung der folgenden Formel (II):

$$R_m{}^1Si(OR^2)_{4-m} \qquad (II)$$

in der bedeuten: $R^1$ eine Alkylgruppe mit 1 bis 8 Kohlenstoffatomen oder eine Phenylgruppe, $R^2$ eine Alkylgruppe mit 1 bis 8 Kohlenstoffatomen und m gleich 1, 2 oder 3,
(2) Unsetzen des Reaktionsproduktes mit einer Grignardverbindung der folgenden Formel (III):

$$R^3MgX^1 \qquad (III)$$

in der $R^3$ eine Alkylgruppe mit 1 bis 8 Kohlenstoffatomen ist und $X^1$ ein Halogenatom darstellt, unter Bildung eines Trägers und (3) in Kontaktbringen des Trägers mit einem Titantetrahalogenid.

2. Verfahren nach Anspruch 1, dadurch gekennzeichnet, daß das Reaktionsprodukt aus einem Aluminiumhalogenid und der Siliciumverbindung der Formel (II) durch 0,1 bis 2 stündige Umsetzung von 0,1 bis 10 Molen eines Aluminiumhalogenides pro Mol der Siliciumverbindung in einem inerten organischen Lösungsmittel bei einer Temperatur von −50 bis 100°C hergestellt wird.

3. Verfahren nach Anspruch 1, dadurch gekennzeichnet, daß man als Aluminiumhalogenid Aluminiumchlorid verwendet.

4. Verfahren nach Anspruch 1, dadurch gekennzeichnet, daß man als Siliciumverbindung der Formel (II) Methyltriethoxysilan oder Phenyltriethoxysilane verwendet.

5. Verfahren nach Anspruch 1, dadurch gekennzeichnet, daß das Reaktionsprodukt aus einem Aluminiumhalogenid mit der Siliciumverbindung der Formel (II) umgesetzt wird mit 0,05 is Molen der Grignardverbindung der Formel (III), pro Mol Aluminiumhalogenid, das zur Herstellung des Reaktionsprodukts verwendet wird, derart, daß eine Lösung des Reaktionsprodukts in einem inerten organischen Lösungsmittel und einen Lösung der Grignardverbindung in einem Ether oder einer Lösungsmittelmischung aus einem Ether und einem aromatischen organischen Lösungsmittel allmählich ineinander eingearbeitet werden, wobei der Ether der folgenden Formel entspricht:

$$R^5{-}O{-}R^6$$

in der $R^5$ und $R^6$ Alkylgruppen mit 2 bis 8 Kohlenstoffatomen darstellen.

6. Verfahren nach Anspruch 1, dadurch gekennzeichnet, daß man als Grignardverbindung der Formel (III) ein Alkylmagnesiumchlorid verwendet.

7. Verfahren nach Anspruch 1, dadurch gekennzeichnet, daß der Träger, hergestellt durch Umsetzung des Reaktionsproduktes aus einem Aluminiumhalogenid und der Siliciumverbindung mit der Grignardverbindung vor der Kontaktbehandlung mit dem Titantetrahalogenid mit einem inerten organischen Lösungsmittel gewaschen wird.

8. Verfahren nach Anspruch 1, dadurch gekennzeichnet, daß der Träger mit 1 bis 100 Molen Titantetrahalogenid pro Mol Grignardverbindung, die für die Herstellung des Trägers verwendet werden, in Kontakt gebracht wird.

9. Verfahren nach Anspruch 1, dadurch gekennzeichnet, daß man als Titantetrahalogenid Titantetrachlorid verwendet.

10. Verfahren nach Anspruch 1, dadurch gekennzeichnet, daß die Menge organischer Aluminiumverbindung (B) bei 1 bis 1000 Molen pro Grammatom Titan in der festen Katalysatorkomponente (A) liegt.

11. Verfahren nach Anspruch 1, dadurch gekennzeichnet, daß man als organische Aluminiumverbindung (B) Triethylaluminium, Triisobutylaluminium, Diethylaluminiumchlorid oder Dibutylaluminiumchlorid verwendet.

12. Verfahren nach Anspruch 1, dadurch gekennzeichnet, daß man Ethylen oder eine Mischung aus Ethylen mit einem α-Olefin mit mindestens 3 Kohlenstoffatomen unter einem Druck von 500 bis 3000 kg/cm$^2$ bei einer Temperatur von 150 bis 350°C polymerisiert, während die feste Katalysatorkomponente (A) und die organische Aluminiumverbindung (B) getrennt voneinander oder als Gemisch in das Polymerisationssystem eingespeist werden.

**Revendications**

1. Un procédé pour la polymérisation de l'éthylène qui comprend la polymérisation de l'éthylène ou d'un mélange d'éthylène et d'une α-oléfine ayant au moins 3 atomes de carbone sous une pression d'au moins 200 kg/cm$^2$ (196 bars) à une température qui n'est pas inférieure à 125°C en présence d'un catalyseur obtenu à partir de (A) un composant catalytique solide et (B) un composé organique d'aluminium représenté par la formule (I) suivante:

$$R^4{}_nAlX^2{}_{3-n} \qquad (I)$$

dans laquelle $R^4$ est un groupe alkyle ayant 1 à 6 atomes de carbone, $X^2$ est un atome d'halogène et n est un nombre de 1,5 à 3,
ledit composant catalytique solide étant obtenu par (1) la réaction d'un halogénure d'aluminium avec un composé du silicium représenté par la formule (II) suivante:

$$R_m{}^1Si(OR^2)_{4-m} \qquad (II)$$

dans laquelle $R^1$ est un groupe alkyle ayant 1 à 8 atomes de carbone ou un groupe phényle, $R^2$ est un groupe alkyle ayant 1 à 8 atomes de carbone et m est 1, 2 ou 3,
(2) réaction du produit réactionnel avec un composé de Grignard représenté par la formule (III) suivante:

$$R^3MgX^1 \qquad (III)$$

dans laquelle $R^3$ est un groupe alkyle ayant 1 à 8 atomes de carbone et $X^1$ est un atome d'halogène, pour former un support puis, (3) contact du support avec un tétrahalogénure de titane.

2. Un procédé selon la revendication 1, dans lequel ledit produit réactionnel d'un halogénure d'aluminium et du composé de silicium de formule (II) est préparé par réaction de 0,1 à 10 mol par mole du composé de silicium d'un halogénure d'aluminium dans un solvant organique inerte à une température de −50 à 100°C pendant 0,1 à 2 h.

3. Un procédé selon la revendication 1, dans lequel ledit halogénure d'aluminium est le chlorure d'aluminium.

4. Un procédé selon la revendication 1 dans lequel ledit composé du silicium de formule (II) est le méthyltriéthoxysilane ou le phényltriéthoxysilane.

5. Un procédé selon la revendication 1, dans lequel le produit réactionnel d'un halogénure d'aluminium et du composé du silicium de formule (II) est mis à réagir avec 0,05 à 4 mol du composé de Grignard de formule (III) par mole de l'halogénure d'aluminium utilisé pour la préparation dudit produit réactionnel, de façon qu'une solution dudit produit réactionnel dans un solvant organique inerte et une solution du composé de Grignard dans un éther ou un solvent mixte constitué d'un éther et d'un solvant organique aromatique soient mutuellement incorporées graduellement, ledit éther étant représenté par la formule:

$$R^5—O—R^6$$

dans laquelle $R^5$ et $R^6$ sont un groupe alkyle ayant 2 à 8 atomes de carbone.

6. Un procédé selon la revendication 1, dans lequel ledit composé de Grignard de formule (III) est un chlorure d'alkylmagnésium.

7. Un procédé selon la revendication 1, dans lequel le support, préparé par la réaction du produit réactionnel d'un halogénure d'aluminium et du composé de silicium avec le composé de Grignard, est lavé avec un solvant organique inerte avant ledit traitement de contact avec le tétrahalogénure de titane.

8. Un procédé selon la revendication 1, dans lequel ledit support est mis en contact avec 1 à 100 mol du tétrahalogénure de titane par mole du composé de Grignard utilise pour la préparation dudit support.

9. Un procédé selon la revendication 1, dans lequel ledit tétrahalogénure de titane est le tétrachlorure de titane.

10. Un procédé selon la revendication 1, dans lequel la quantité dudit composé organique d'aluminium (B) est dans la gamme de 1 à 1 000 mol par atome-gramme de titane contenu dans le composant catalytique solide (A).

11. Un procédé selon la revendication 1, dans lequel ledit composé organique d'aluminium (B) est le triéthylaluminium, le triisobutylaluminium, le chlorure de diéthylaluminium ou le chlorure de dibutylaluminium.

12. Un procédé selon la revendication 1, dans lequel l'éthylène ou un mélange d'éthylène avec une α-oléfine ayant au moins 3 atomes de carbone est polymérisé sous une pressure de 500 à 3 000 $kg/cm^2$ (490 à 2 940 bars) à une température de 150 à 350°C, tandis que le composant catalytique solide (A) et le composé organique d'aluminium (B) sont introduits dans le système de polymérisation séparément ou sous forme d'une mélange.